# EUROPEAN PATENT APPLICATION

(11) **EP 4 349 477 A1**
(43) Date of publication of application: **10.04.2024**
(21) Application number: 23197748.9
(22) Date of filing: 15.09.2023
(51) Int. Cl.: B01J 20/289, B01D 15/36, B01J 20/32, B01J 39/26, B01J 41/05, B01J 41/07, B01J 41/20

(54) **HYBRID GRAFTED AND HYPERBRANCHED ANION EXCHANGERS**

(30) Priority: 16.09.2022 US 202217932840
(71) Applicant: Dionex Corporation, Sunnyvale, CA 94085 (US)
(72) Inventor: ZATIRAKHA, Aleksandra, SAN JOSE, 95128 (US); BLANK, Anna, San Jose, 95124 (US); CHEN, Jinhua, San Jose, 95132 (US); POHL, Christopher A., Union City, 94587 (US)
(74) Representative: Robinson, Louise Frances

(57) **Abstract**

The present invention relates to a coated ion exchange substrate suitable for use in chromatography medium and methods of making thereof.

## Description

### FIELD OF THE INVENTION

The present invention relates to a coated ion exchange substrate suitable for use in chromatography medium and methods of making thereof.

### BACKGROUND OF THE INVENTION

Ion chromatography has been a powerful technique for the determination of various inorganic and organic ions. However, providing an anion exchanger that has both high efficiency and selectivity together with stability in highly alkaline media required for the separation of anions still poses challenges.

This is because the separation provided by anion exchangers is dependent on the various parameters, including the substrate type, particle size, size distribution, hydrophilicity of the stationary phase, water content of the stationary phase and packing procedures.

There is therefore a need for stable anion exchange material that provides both high efficiency and selectivity.

Recently, such anion exchange materials have been reported using electrostatically bonded hyperbranched functional layers formed on the negatively charged sulfonated substrate surface, such as C. Pohl, C. Saini, New developments in the preparation of anion exchange media based on hyperbranched condensation polymers, J. Chromatogr. A1213 (2008) 37-44.

However, it is difficult to apply this approach for covalent bonding of hyperbranched layer because it is difficult to introduce any other functionalities that could work as attachment points for such a layer into the sulfonated substrate.

A key element in utilising covalent attachments is assuring that the covalent attachment points are solely found on the surface of the substrate and very few, preferably none, are within the dense polymer below the surface. Ion exchange sites in the dense polymer phase result in poor mass transport and result in lower efficiency and poor peak shape.

However, as discussed below, this has proved difficult to achieve.

For example, in "Anion exchangers with negatively charged functionalities in hyperbranched ion-exchange layers for ion chromatography by Zatirkha et al J. of Chromatography A. 1482 (2017) pages 57-64", novel PS-DVB based anion exchangers with covalently-bonded hyperbranched functional ion-exchange layers containing negatively charged functionalities are obtained and examined. However, these suffer from the disadvantage that the amino groups used as attachment points for the hyperbranched layer introduced by chemical derivatization procedure and thus are located both inside and outside the particles which negatively impacts column performance.

In "Hyperbranched anion exchangers prepared from polyethylene polyamine modified polymeric substrates for ion chromatography, J of Chromatography A. 1655 (2021) 462508", novel polymeric anion exchangers grafted with polyethylene polyamines, including ethylenediamine, diethylenetriamine, triethylenetetramine and tetraethylene pentaamine, via a facile epoxy-amine polymerization methods are reported. However, the epoxide groups unfortunately end up being incorporated uniformly throughout the particle, again, negatively impacting column performance.

In "Hyperbranched anion exchangers prepared from thiol-ene modified polymeric substrates for suppressed ion chromatography, Talanta 184 (2018) pages 491-498", a facile and neat method via thiol-ene reaction to immobilize cysteamine/cysteine onto allylmethacrylate-divinylbenzene (AMA-DVB) and ethylvinylbenzene-divinylbenzene (EVB-DVB) is reported. However, the cysteamine/cysteine moieties end up being incorporated in throughout the particle, therefore, column efficiency is rather low.

Finally, in "Covalent hyperbranched porous carbon nanospheres as a polymeric stationary phase for ion chromatography, Micochimica Acta, (2019) 186, 139", a method for covalent quaternization of porous carbon nanospheres (PCNSs) and their application as anion exchange stationary phase for ion chromatography is described. However, the polyamine layer is primarily held by amide bonds which are hydrolysed at high pH, resulting in poor column stability.

### SUMMARY OF THE INVENTION

In summary, column packing that uses covalently bonded substrates have been found to be less efficient than electrostatically bonded substrates and more difficult to prepare.

The listing or discussion of an apparently prior-published document in this specification should not necessarily be taken as an acknowledgement that the document is part of the state of the art or is common general knowledge.

As chromatographic selectivity is not only affected by the characteristics of the substrate, but is also dependent on the structure of the functional layer and the way of its attachment to the substrate, it would be advantageous to provide hyperbranched anion-exchange materials where functional layers are covalently bonded to the substrate to provide additional options for ion separation.

The present invention seeks to solve at least some of the above issues by the use of high polarity monomers, such as the use of N-vinyl formamide, to form a covalently bonded polymer on the substrate, where the polymer has pendant amino groups capable of further reaction with hyperbranching substrates, such as amine compounds comprising amino groups selected from the group consisting of ammonia, a primary and a secondary amine and/or polyfunctional compound, having at least two functional moieties reactive with said primary and/or secondary amine groups.

Accordingly, the present invention provides a method for making an ion exchange chromatographic packing material, wherein the packing material comprises a condensation polymer covalently bonded to substrate particles and the method for forming the condensation polymer comprises:
(a) forming a linear polymer product comprising pendant amino groups by reacting (at least) a monomer comprising at least one unsaturated carbon-carbon bond and at least one functional group selected from amino, a functional group capable of being converted to an amino group by hydrolysis and a functional group capable of being converted to an amino group via reaction with an amine either directly or indirectly, with an initiator in a polar solvent, and optionally converting any pendent functional groups capable of being converted to an amino group by hydrolysis and/or functional groups capable of being converted to an amino group via reaction with an amine either directly or indirectly on the linear polymer product to pendant amino groups;
(b) reacting the pendent amino groups present on the linear polymer product after step (a) with:
   (i) at least a first polyfunctional compound, having at least two functional moieties reactive with said pendent amino groups, or
   (ii) at least a first polyfunctional compound, having at least two functional moieties reactive with said pendent amino groups and at least a first amine compound, comprising amino groups selected from the group consisting of ammonia, a primary and a secondary amine,
to form a first condensation polymer reaction product with a first unreacted excess of functional moieties.

This method is hereinafter referred to as the method of the invention.

In step (a) a linear polymer product comprising pendant amino groups is formed. The product is formed by reacting a monomer comprising at least one unsaturated carbon-carbon bond and at least one functional group selected from amino, a functional group capable of being converted to an amino group by hydrolysis and a functional group capable of being converted to an amino group via reaction with an amine either directly or indirectly with an initiator in a polar solvent to form a linear polymer product comprising pendant functional groups. The pendant functional groups will depend on the monomer used in step (a). If the monomer comprises amino groups, then the pendant functional groups will comprise pendant amino groups and the product may be used without any additional modification. However, if the monomer comprises a functional group capable of being converted to an amino group by hydrolysis and/or a functional group capable of being converted to an amino group via reaction with an amine either directly or indirectly then the polymer product will undergo an additional step to convert the functional group capable of being converted to an amino group by hydrolysis and/or functional group capable of being converted to an amino group via reaction with an amine either directly or indirectly into an amino group.

The pendant groups on the linear polymer product may comprise only pendant amino groups (for example, the pendant groups on the linear polymer product may consist or consist essentially of pendant amino groups) or the pendant groups may comprise a mixture of pendant amino groups and pendant a functional group capable of being converted to an amino group by hydrolysis and/or a functional group capable of being converted to an amino group via reaction with an amine either directly or indirectly. In a preferred aspect, the pendant groups on the linear polymer product may consist of amino groups.

As used herein, an "amino group" is intended to include primary, secondary or tertiary amine groups. In an aspect of the invention, "amino" may include primary and secondary amines or primary amines only. The amino groups may be singular or multifunctional, that is the amino group may comprise a single primary, secondary or tertiary amine group or may comprise more than one primary, secondary or tertiary amine group, such as two or three primary, secondary or tertiary amine groups.

As used herein, "a functional group capable of being converted to an amino group by hydrolysis" is intended to include groups that when reacted with water (acidic or basic solution) provides a primary, secondary or tertiary amine group. For example, an amide group.

As used herein, "a functional group capable of being converted to an amino group via reaction with an amine either directly or indirectly" is intended to include groups that when reacted with an amine group form a primary, secondary or tertiary amine group. For example, through nucleophilic substitution of haloalkanes or reductive amination.

In an aspect of the invention, the functional group capable of being converted to an amino group in step (a) may not comprise a hydroxyl group.

Examples of monomers comprising a functional group capable of being converted to an amino group by hydrolysis or a functional group capable of being converted to an amino group via reaction with an amine either directly or indirectly include, but are not limited to, amides (such as N-vinylformamide or styrene amide), isocyanates (such as vinyl isocyanate, allyl isocyanate or 3-isopropenyl-dimethylbenzyl isocyanate), carbamates, isocyanurates, epoxides, halides, sulphides and tosylates

Preferred monomers that may be used in step (a) include, but are not limited to, N-vinylformamide, N-methyl-N-vinylacetamide, N-[(4-vinylphenyl)methyl]acetamide, styrene amide, allylamine, amino styrene and vinyl pyridine monomers.

The monomers used in step (a) may preferably be polar monomers, preferably highly polar monomers.

By polar monomer, or highly polar monomer, we mean that the monomer is insoluble or substantially insoluble in the substrate used. That is the monomer does not dissolve in (or only slightly dissolves in) the substrate. The substrate is defined in more detail below.

The monomer used in step (a) comprises at least one unsaturated carbon-carbon bond and at least one functional group as defined above. For example, the monomer may comprise one, two, three or more unsaturated bonds and/or one, two, three or more functional groups.

In an aspect of the invention, the monomer may not comprise methylacrylate based monomers.

The monomer used in step (a) may be the same type or different. For example, a single type of monomer comprising the same functional group may be used, i.e. the monomer may contain the same amino group. Alternatively, more than one type of monomer may be used, where at least one monomer comprises a different functional groups selected from amino, a functional group capable of being converted to an amino group by hydrolysis and a functional group capable of being converted to an amino group via reaction with an amine either directly or indirectly. For example, a combination of two, three, four or five different monomers may be used, wherein at least one comprises a functional group selected from amino, a functional group capable of being converted to an amino group by hydrolysis and a functional group capable of being converted to an amino group via reaction with an amine either directly or indirectly.

On rection with an initiator, the monomer used in step (a) forms a linear polymer product comprising pendant functional groups selected from amino groups, functional groups capable of being converted to an amino group by hydrolysis and/or functional groups capable of being converted to an amino group via reaction with an amine either directly or indirectly.

The formation of a linear polymer is important as it aids the subsequent hyperbranching steps and provides a basis for hyperbranched structures at every amino group in the chain, while also providing a mechanism for cross-linking between chains further enhancing cross-linking control.

The initiator may be thermal polymerisation initiator or may be a photopolymerisation initiator. It may be preferred that the initiator is a thermal polymerisation initiator, such as AIBN (2,2'-Azobisisobutyronitrile), 2,2'-Azobis[2-(2-imidazolin-2-yl)propane]dihydrochloride and ACVA (4,4'-Azobis(4-cyanovaleric acid).

The polar solvent may be any polar solvent typically used in polymerisation reactions. For example, the polar solvent may be selected from carbonates, alcohols, ethylene glycols, formamide, acetamide and DMSO.

Where the pendent functional groups on the linear polymer product comprise those capable of being converted to an amino group by hydrolysis or those capable of being converted to an amino group via reaction with an amine either directly or indirectly, step (a) includes converting these functional groups into amino groups in order to provide the linear polymer product comprising pendant amino groups. How the functional groups are converted will depend on the functional group present. For example, amide groups may be hydrolysed using any suitable hydrolysis reaction. For example, heating the amide containing linear polymer product with an aqueous acid or alkaline solution. Such methods would be known to the person skilled in the art.

The linear polymer product formed after step (a) may be referred to as a "basement layer" because it is ultimately attached to substrate particles. For example, it may be attached to substrate particles during step (a). Alternatively, the polymer may be formed in the absence of the substrate particle and then subsequently attached using a hydrogen abstraction method. Forming the basement layer in the presence of the substrate particle typically results in the maximum chain density, therefore in an aspect of the invention, forming the linear polymer product in the presence of substrate particles may be preferred.

It should be noted that the basement layer does not necessarily totally cover or coat the substrate to which it is attached. However, it may be preferred that the basement layer does totally cover or coat the substate. The coverage or coating may depend on the number of functional groups present on the substrate that have formed a covalent bond with the linear polymer product.

As noted above, step (a) may be conducted in the presence of substrate particles. If step (a) is conducted in the presence of substrate particles, then the covalent bond is formed during this step and it is not necessary to react the product of step (a) or (b) with further substrate particles.

For example, the method for making an ion exchange chromatographic packing material may comprise:
(a) forming a linear polymer product comprising pendant amino groups, wherein the product is covalently bonded to substrate particles, by reacting (at least) a monomer comprising at least one unsaturated carbon-carbon bond and at least one functional group selected from amino, a functional group capable of being converted to an amino group by hydrolysis and a functional group capable of being converted to an amino group via reaction with an amine either directly or indirectly, with an initiator in a polar solvent in the presence of substrate particles, and optionally converting any pendent functional groups capable of being converted to an amino group by hydrolysis and/or functional groups capable of being converted to an amino group via reaction with an amine either directly or indirectly on the linear polymer product to pendant amino groups;
(b) reacting the pendent amino groups present on the linear polymer product after step (a) with:
   (i) at least a first polyfunctional compound, having at least two functional moieties reactive with said pendent amino groups, or
   (ii) at least a first polyfunctional compound, having at least two functional moieties reactive with said pendent amino groups and at least a first amine compound, comprising amino groups selected from the group consisting of ammonia, a primary and a secondary amine
to form a first condensation polymer reaction product with a first unreacted excess of functional moieties.

Alternatively, the product of step (a) or (b) may be reacted with substrate particles to form a covalent bond between particles and the product of step (a) or the product of step (b), for example, through a hydrogen abstraction method. Unless the substrate was present in step (a) as indicated above.

For example, the method for making an ion exchange chromatographic packing material may comprise:
(a) forming a linear polymer product comprising pendant amino groups by reacting (at least) a monomer comprising at least one unsaturated carbon-carbon bond and at least one functional group selected from amino, a functional group capable of being converted to an amino group by hydrolysis and a functional group capable of being converted to an amino group via reaction with an amine either directly or indirectly, with an initiator in a polar solvent, and optionally converting any pendent functional groups capable of being converted to an amino group by hydrolysis and/or functional groups capable of being converted to an amino group via reaction with an amine either directly or indirectly on the linear polymer product to pendant amino groups;
   (i) reacting the product of step (a) with substrate particles to form a covalent bond between the linear polymer product and the substrate;
(b) reacting the pendent amino groups present on the linear polymer product after step (a) with:
   (i) at least a first polyfunctional compound, having at least two functional moieties reactive with said pendent amino groups, or
   (ii) at least a first polyfunctional compound, having at least two functional moieties reactive with said pendent amino groups and at least a first amine compound, comprising amino groups selected from the group consisting of ammonia, a primary and a secondary amine
to form a first condensation polymer reaction product with a first unreacted excess of functional moieties.

Alternatively, the method for making an ion exchange chromatographic packing material may comprise:
(a) forming a linear polymer product comprising pendant amino groups by reacting (at least) a monomer comprising at least one unsaturated carbon-carbon bond and at least one functional group selected from amino, a functional group capable of being converted to an amino group by hydrolysis and a functional group capable of being converted to an amino group via reaction with an amine either directly or indirectly, with an initiator in a polar solvent, and optionally converting any pendent functional groups capable of being converted to an amino group by hydrolysis and/or functional groups capable of being converted to an amino group via reaction with an amine either directly or indirectly on the linear polymer product to pendant amino groups;
(b) reacting the pendent amino groups present on the linear polymer product after step (a) with:
   (i) at least a first polyfunctional compound, having at least two functional moieties reactive with said pendent amino groups, or
   (ii) at least a first polyfunctional compound, having at least two functional moieties reactive with said pendent amino groups and at least a first amine compound, comprising amino groups selected from the group consisting of ammonia, a primary and a secondary amine
to form a first condensation polymer reaction product with a first unreacted excess of functional moieties and reacting the product of step (b) (i) or (ii) with substrate particles to form a covalent bond between the product of step (b) (i) or (ii) and the substrate.

The substrate particles have a surface comprising an organic polymer. The monomers used in step (a) of the method of the invention are insoluble, or substantially insoluble, in the substrate particles. For example, insoluble, or substantially insoluble, in the organic polymer on the surface of the particle.

The term "surface" encompasses both the surface of a substrate which is of the same chemical makeup as the remainder of the substrate, and a surface with a surface layer on a support substrate of a different chemical makeup. Thus, the organic polymer surface may comprise the entire substrate particle or just the top surface of the substrate particle which may be formed of another material such as one made of an inorganic oxide. Alternatively, the substrate particle may comprise in inorganic material on its surface, such as one made of an inorganic oxide, e.g., silica gel, alumina, titania, zirconia, and fused silica.

Suitable substrate particles can include a variety of commercially available chromatographic media such as packed beds of chromatography particles, and also include many other formats including tubing which has been suitably derivatized and fused silica capillaries which can be used after a simple base hydrolysis treatment to activate the surface. Thus, the term "substrate particles" encompasses one or more substrates unless otherwise specified. Furthermore, products based on planar materials such as "chips" and arrays commonly employed in biological assays may also be employed as substrates. In the latter case, the surfaces may be modified by application of multiple layers as described above or one or more layers of gel forming reagent mixtures may be applied to the surface to form binding sites for biological molecules.

Suitable substrate particles include, but are not limited to, ethylvinylbenzene-divinylbenzene (EVB-DVB), polystyrene-divinylbenzene (PS-DVB), and polyvinylalcohol (PVA).

The covalent bond is between free double bonds on the particles and linear polymer product.

In an aspect of the invention, the substrate particles used are not sulfonated or negatively charged.

The weight ratio of substrate to monomer may be from about 10:0.5 to about 2.5:2.5, such as about 3:1.

In step (b) of the method of the invention, the pendent amino groups present on the linear polymer product are reacted with (i) at least a first polyfunctional compound, having at least two functional moieties reactive with said primary and/or secondary amine groups, or (ii) at least a first polyfunctional compound, having at least two functional moieties reactive with said pendent amino groups and at least a first amine compound, comprising amino groups selected from the group consisting of ammonia, a primary and a secondary amine to form a first condensation polymer reaction product (CPRP) with a first unreacted excess of functional moieties.

The reaction in step (b) is performed to provide an excess of unreacted (and therefore reactive) functional moieties. These may be unreacted moieties on the polyfunctional compound or unreacted moieties on the amine compound in the first CPRP. By "unreacted" it is meant that one or more of the functional moieties is unreacted, for example has not taken part in a condensation reaction and is therefore still reactive.

The at least a first polyfunctional compound comprises at least two functional moieties reactive with the amino groups in the basement layer or subsequent amine compounds forming the first, second or higher numbered CPRP layers. Suitable functional moieties in the polyfunctional compounds include one or more of epoxides, alkyl halides, benzylhalides, tosylates, methylsulfides and mixtures thereof.

Suitable epoxides include butadiene diepoxide, ethyleneglycol diglycidyl ether, butanediol diglycidyl ether, diethyleneglycol diglycidyl ether, hexanediol diglycidyl ether, glycerol triglycidyl ether and numerous other compounds containing two or more epoxy groups including epoxy resins commonly used in commercial epoxy formulations. Suitable alkyl halides include dichloroethane, dichloropropane, dichlorobutane, dibromoethane, dibromopropane dibromobutane as well as numerous other alkyl halides. Suitable benzylhalides include alpha, alpha- dichloroxylene and alpha, alpha-dibromoxylene as well as numerous other benzylic halides. Suitable tosylates include ethyleneglycolditosylate, diethyleneglycolditosylate as well as tosylates of various other aliphatic or aromatic polyols. Suitable methylsulfides include 1,3-bis(methylthio)propane and 1,4-bis(methylthio)butane as well as numerous other polymethylsulfides. The polyfunctional compounds for the present invention preferably include epoxide polyfunctional moieties defined to include monoepoxide compounds, diepoxide compounds and/or polyepoxide moieties in compounds including polymers.

The size of the polyfunctional compounds may vary over a wide range from simple non-polymeric compounds, e.g., with molecular weights less than 87 to small polymeric compounds with molecular weights of 234 to 10,000. Preferably the polyfunctional compounds are water soluble and consist of glycidyl ethers of polyols or contain glycidyl ethers attached to hydrophilic polymers such as polyethyleneglycol or polypropyleneglycol or are combinations of all three such as glycerol propoxylate triglycidyl ether.

Other polyfunctional reagents capable of forming condensation polymers with either polyfunctional amines or polyfunctional epoxide may also be used in conjunction with or in the place of materials suitable for reacting with amines or materials suitable for reacting with epoxides. Suitable alternative polyfunctional reagents for reacting with polyfunctional amines include 2-methyl-2-nitro-1,3-propanediol, dithiobis(succinimidyl propionate), cyanuric chloride, and polyfunctional acid chlorides such as dimethyl adipimidate dihydrochloride. Suitable alternative polyfunctional reagents for reacting with polyfunctional epoxides include compounds such as polyfunctional thiols. Preferably suitable reagents are also water-soluble in order to facilitate water-based synthesis methods.

The at least a first amine compound comprises an amino group selected from the group consisting of ammonia, a primary and a secondary amine. The at least first amino compound may include additional amine groups and may include both primary and secondary amines as well as tertiary amines.

Suitable amino groups of the primary amine type include methylamine, ethylamine, propylamine, isopropylamine, butylamine, isobutylamine, sec-butylamine, tert-butylamine, amylamine, tert-amylamine, hexylamine, heptylamine, octylamine, benzylamine, phenethylamine, ethanolamine, 3-amino-1-propanol, 1-amino-2-propanol, 2-amino-1-propanol, 2-amino-1,3-propandiol, 4-amino-1-butanol as well as numerous other primary amines either with or without additional polar and/or hydrophilic substituents.

Suitable amino groups of the secondary amine type include dimethylamine, diethylamine, dipropylamine, diisopropylamine, dibutylamine, diisobutylamine, di-sec-butylamine, di-tert-butylamine, di-tert -amylamine, dipentylamine, dihexylamine, diethanolamine, methylethanolamine, ethylethanolamine, morpholine as well as numerous other secondary amines either with or without additional polar and/or hydrophilic substituents.

Suitable amine compounds include aliphatic diamines such as ethylenediamine, 1,3-diaminopropane, 1,2- diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,12-diaminododecane, 1,2-diaminocyclohexane, 1,4-diaminocyclohexane, aromatic benzylic diamines such as m-xylylenediamine,p -xylylenediamine, aliphatic polyamines such as diethylenetriamine, triethylenetetramine and higher polymeric analogues as well as a variety of other structures containing multiple primary, secondary and/or tertiary amine groups in a single compound.

Both the primary and secondary amines are polyfunctional in nature in that they each include at least two functional groups which can react with the polyfunctional groups to form a CPRP as will be described hereinafter. The size of the amine compounds may vary over a wide range from simple non-polymeric compounds, e.g., with molecular weights ranging from 17 to small polymeric compounds with molecular weights of 200 to 10,000. Preferably, each amino group in the amine compounds should have at least three atoms in the link between each amino group in order to achieve good reactivity for each amino group but polymeric species such as polyethyleneimine and polyamines derived from the hydrolysis of n-vinylformamide polymers are also useful in the present invention.

In step (b) a large excess of the at least first polyfunctional compound or at least a first polyfunctional compound and at least a first amine compound may be used.

The compounds used in step (b) may include the first amine compound as the only amine compound and the first polyfunctional compound as the only polyfunctional compound. Alternatively, it can include mixtures of the first amine compound with one or more additional amine compounds. Further, it can include the first polyfunctional compound alone with the first or additional amine compounds or may include a mixture of the first polyfunctional compound and one or more additional polyfunctional compounds. In this way, each condensation polymer reaction product may be tailored to include the desired functions.

Further, the amino groups in each amine compound and the two functional moieties in the polyfunctional compounds may be the same or different from each other. For example, the first amine compound may include at least only a primary amine group, only a secondary amine group, one or more primary and/or secondary groups, or the like. Similarly, the first polyfunctional compound may include the at least two functional moieties reactive with the amino groups which are of the same type or a different type, and may include, in addition, more than two functional moieties.

Successive CPRPs may be formed after step (b) by reacting the unreacted excess of functional moieties of the first CPRP with further polyfunctional compound and/or amine compound. The compound used to form the subsequent CPRPs will depend on the unreactive moieties present on the previous CPRP. For example, if the first CPRP is formed via step (b) (i), then the subsequent CPRP may be formed using an excess of amine compound or an excess of both polyfunctional compound and amine compound. Alternatively, if the first CPRP is formed by step (b) (ii), then the subsequent CPRP may be formed using an excess of polyfunctional compound or an excess of both polyfunctional compound and amine compound.

Thus, the method may comprise a step (c) (i) in which the unreacted excess of functional moieties on the CPRP of step (b) (i) may be reacted with (an excess of) at least a second amine compound or (an excess of) both at least a second polyfunctional compound and at least a second amine compound to form a second CPRP; or a step (c) (ii) in which the unreacted excess of functional moieties on the CPRP of step (b) (ii) may be reacted with (an excess of) at least a second polyfunctional compound or (an excess of) both at least a second polyfunctional compound and at least a second amine compound to form a second CPRP.

In this way, the polyfunctional compound and amine compound may be added sequentially or in one pot to form the successive CPRPs.

This process can be repeated as many times as desired to accomplish desired properties to the end product, typically in the form of a complete coating on the substrate particle.

Referring to step (c) (i) or (ii), and any subsequent repetitions if present, the at least second amine compound or second polyfunctional compound may be characterized in an analogous manner to the first amine compound and first polyfunctional compound. Thus, the second amine compound may be in a mixture with one or more additional amine compounds and may comprise one or more primary and/or secondary amine groups in the second amine compound.

It should be noted that the terms "second amine compound" and "second polyfunctional compound" in step (c) (i) or (ii), are used to show that step (c) (i) or (ii) occurs after step (b). However, the meaning of the term "second amine compound" encompasses an amine compound which is the same as or different from the first amine compound. Similarly, the term "second polyfunctional compound" encompasses a second polyfunctional compound which is the same as or different from the first polyfunctional compound.

Using the above method, a coated ion exchange substrate is formed in which the coating comprises at least a first CPRP. The first CPRP is covalently bound to the surface of the support substrate particles through the linear polymer formed in step (a) and comprises at least first amine compound of the foregoing type and/or at least a first polyfunctional compound with at least two functional moieties reactive with the amino groups of the first amine compound. A second CPRP is formed comprising the reaction product of the first amine compound or first polyfunctional compound with a second amine compound or second polyfunctional compound. This product encompasses at least the first and second CPRPs, in addition, a third or any subsequent CPRPs formed in sequential reaction with the second CPRP as described above.

The reaction step (c) may be repeated any desired number of times. At any time in the above process, the outside layer of condensation polymer reaction products have the cation functionality of the amine groups. The product of this reaction may be used directly in this form without further modification. In this case, the product of this reaction will contain both strong base anion exchange sites and weak base anion exchange sites which can be advantageous for some separations.

However, strong base anion exchange sites may be introduced into the outside layer of the condensation polymer through a capping reaction by reacting with a capping compound comprising a tertiary amine group. In this manner, the reaction is capped or terminated and the ion exchange coating includes a greatly increased number of quaternary amines conventionally used for the separation of anions, as when the substrate is used in the form of anion exchange packing for a chromatography column or the like.

The coated ion exchange substrate may be converted to a cation exchange substrate by reacting excess amine reactive functional groups on the exterior surface of the coated substrate with amine containing cation functional compounds to convert the substrate to a cation exchange substrate. As set forth above, in one preferred embodiment, the substrate comprises a plurality of substrates in the form of particles and the coated particles comprise ion exchange packing particles such as for chromatographic separations. Suitable amine containing cation functional groups include sulfonic acid, phosphonic acid and carboxylic acid or combinations thereof. Preferably, suitable amine containing cation functional compounds include two or more cation functional groups such that the total number of cation functional groups exceeds the number of previously formed anion exchange sites. Suitable compounds include: γ-Carboxyglutamic acid, Nitrilotriacetic acid, 3,3',3"-Nitrilotripropionic Acid, N-(2-Carboxyethyl)iminodiacetic acid, N-(Phosphonomethyl)glycine, 2-Amino-3-phosphonopropionic acid, Iminodi(methylphosphonic acid), 2-Aminoethylphosphonic acid, Piperazine-1,4-bis(2-ethanesulfonic acid), Homocysteic acid and 2-Amino-3-sulfopropionic acid, as well as numerous other amine containing cation functional compounds.

The coated ion exchange substrate may be converted to a cation exchange substrate by reacting excess amine functional groups on the exterior surface of the coated substrate with cation functional compounds to convert the substrate to a cation exchange substrate. As set forth above, in one preferred embodiment, the substrate comprises a plurality of substrates in the form of particles and the coated particles comprise ion exchange packing particles such as for chromatographic separations. Suitable cation functional groups include sulfonic acid, phosphonic acid and carboxylic acid. Suitable cation functional compounds include: chloroacetic acid, bromoacetic acid, chloropropionic acid, bromopropionic acid, sodium 2-chloroethanesulfonate, sodium 2-bromoethanesulfonate or 1,4-Butane sultone. Phosphonic acid cation functional groups can be introduced using suitable reagents such as phosphorouspentachloride or phosphorous oxybromide followed by hydrolysis.

One or more of the condensation polymer functional groups maybe branched and/or cross-linked. For example, the second, third or higher CPRP s can be branched and cross-linked by appropriate choice of reagents and by choice of reagents and by adjustment of the ratios of reagents and excesses of one or the other of the amine compounds and polyfunctional compounds as set forth hereinafter.

For example, the "second CPRP" of step (c) (i) or (ii) may be prepared using a mixture of polyfunctional amine and polyfunctional epoxide compounds. The composition of this layer may be adjusted so that the mixture will not produce a gel under the conditions of application of the "second CPRP." For example, methylamine (a trifunctional amine capable of reacting with a total of three epoxy groups, forming a quaternary ion exchange site) is preferably combined with a water-soluble diepoxide (a difunctional epoxide), in a preferred embodiment butanediol diglycidyl ether. If these two ingredients are combined in the ratio of two moles of methylamine to three moles of butanediol diglycidyl ether, they tend to form a cross-linked gel since they are combined together in a stoichiometry complementing of their functionality. Such a reaction mixture in either the slurry mode or a flow-through "packed column" mode may be undesirable in that in the former case gelation would result in substrate particles suspended in a stable gel unsuitable for use in liquid chromatography and in the latter case would result in the development of extremely high pressures, precluding the use of pumping as a means of delivering the reagent, rendering the material unsuitable for use in liquid chromatography. If instead, the ratio of the two reagents is adjusted so that a gel does not form (preferably using a composition close to that capable of gelation without using a composition capable of gelation), the solution can be passed through the "packed column" without experiencing a high pressure characteristic of gelation. Furthermore, the coating thickness will continue to increase as this solution is passed through the column.

Useful " CPRP coatings", such as the first and/or second and/or subsequent CPRP coatings, can be achieved by using a 1:1 mole ratio of the preferred reagents while allowing the reagents to react in the presence of the product of step (a) or (b) for one hour at 65°C. Using this composition allows formation of a largely linear CPRP on the product of step (a) or the product of step (b) (i) or (b) (ii) if subsequent CPRPs are being formed.

The condensation polymer(s) formed with this composition contains a significant number of reactive amines sites because under these conditions the amine reactant is in excess in terms of the functionality of the reagent. Thus, when combining methylamine (a trifunctional reagent) and butanediol diglycidyl ether (a difunctional reagent) in a 1:1 ratio, a polymer will be formed with on average two butanediol diglycidyl ether reagents attached to each methylamine reagent forming a largely linear polymer with the resulting polymer being primarily an alternating polymer with amine and butanediol diglycidyl ether groups alternating in the polymer chain. The majority of all amine groups thus formed being tertiary at the completion of the "CPRP" preparation step although some of the amine groups at this point will be quaternary and some of the amine groups will be secondary. These tertiary amine groups (as well as the secondary amine groups) are still available for further reaction, forming quaternary sites at each reaction site. Accordingly, the "CPRP", such as the "first CPRP" or the "second CPRP" is accessible for subsequent treatment with polyfunctional epoxides.

In an aspect of the method of the invention, the "linear polymer product" from step (a) may be subsequently allowed to react with a large excess (e.g., 50 to 200%) of polyfunctional epoxide (polyfunctional compound), preferably butanediol diglycidyl ether. By utilizing a large excess of polyfunctional epoxide, the "linear polymer product" is now decorated with pendant unreacted epoxide groups. Following treatment with a large excess (e.g., 50 to 200%) of polyfunctional epoxide, the substrate may then be treated with a large excess of polyfunctional amine (amine compound), preferably methylamine. This leaves the surface decorated with pendant groups containing amine functionality with two residual reactive sites.

Repeating the cycle of using a large excess of polyfunctional epoxide followed by a large excess of polyfunctional amine will result in branch points at every amine with a quaternary site at the branch points. Theoretically, making use of butanediol diglycidyl ether and methylamine and alternating reactions, will result in a doubling of the number branches with each layer. By utilizing this method very high capacities can be achieved by repeating the cycle a suitable number of times (e.g., at least 3, 4, 5, 6, 7, 8 or more times). In practice, the situation is significantly more complex than this because as branching increases the probability of branches becoming cross-linked together also increases. Accordingly, materials produced using the preferred embodiment will tend to have an increasing amount of cross-link as the number of cycles increases (assuming at least 1 of the reagents utilized has a functionality > 2). However, if layers are alternated with both a difunctional amine and a difunctional epoxide, chain propagation will be predominantly linear and cross-linking side reactions will be greatly diminished.

An additional possible complication in this reaction chemistry is the tendency for epoxides to undergo base catalyzed polymerization. Since condensation polymers using this synthesis strategy will be in the hydroxide form, they can under some conditions induce polymerization of the polyfunctional epoxy monomer in the absence of any amine. The final condensation polymer likely contains a fraction of polyepoxide formed via this polymerization side reaction which also decorates the surface. The presence of these additional reaction pathways does not by itself limit the utility of the current method as the examples provided in the attachment coated demonstrate. Useful compositions can be created by varying the different combinations including changing the nature of either the amine or the epoxide or both in each layer or by making use of combinations of either amines or epoxides in each layer.

In a particular aspect, the present invention provides method for making an ion-exchange chromatographic packing material, wherein the packing material comprises a condensation polymer covalently bonded to substrate particles and the method for forming the condensation polymer comprises:
(a) forming a linear polymer product comprising pendant amino groups by reacting (at least) a monomer selected from the group consisting of N-vinylformamide, N-methyl-N-vinylacetamide, N-[(4-vinylphenyl)methyl]acetamide, styrene amide, allylamine, amino styrene and vinyl pyridine monomers with an initiator in a polar solvent in the presence of substrate particles selected from the group consisting of ethylvinylbenzene-divinylbenzene (EVB-DVB), polystyrene-divinylbenzene (PS-DVB), and polyvinylalcohol (PVA), converting pendant amide groups to pendant amino group;
(b) reacting the pendent amino groups present on the linear polymer product after step (a) with:
   (i) at least a first polyfunctional epoxide compound (such as 1,4-butanediol diglycidyl ether), having at least two functional moieties reactive with said pendent amino groups, or
   (ii) at least a first polyfunctional epoxide compound (such as 1,4-butanediol diglycidyl ether), having at least two functional moieties reactive with said pendent amino groups and at least a first amine compound, comprising amino groups selected from the group consisting of ammonia, a primary and a secondary amine (such as methylamine)
to form a first condensation polymer reaction product with a first unreacted excess of functional moieties.

While the exact conditions may vary in terms of concentration, temperature and time required for a given mixture of polyfunctional epoxy monomer and polyfunctional amine to result in gel formation, below is presented possible methodology suitable for preparation of the "first CPRP" or the "second CPRP" in order to prevent gel formation during this step.

An epoxy monomer may be used to produce hydroxide selective materials. Hydroxide selectivity requires hydroxyl functional groups located near the quaternary centre of each anion exchange site.

Epoxy monomers provide such hydroxyl groups as a byproduct of the reaction of epoxides with amines. Accordingly, such condensation polymers are particularly useful for making hydroxide selectivity anion exchange phases. However, this does not limit the utility of the invention to epoxy monomers and amines. In fact, analogous condensation polymers can also be produced using for example polyfunctional alkylhalides in conjunction with polyfunctional amines. Such condensation polymers will not be hydroxide selective but will still be useful for preparation of anion exchange phases.

Although, as mentioned above, conditions leading to gel formation are generally to be avoided, especially in the case of slurry grafting, useful synthesis methods include use of combinations which ultimately lead to gel formation by simply reducing exposure time of the substrate to the reaction mixture such that the exposure time is less than the gelation time of the reaction mixture.

In one useful aspect of the current invention, passing such a solution through a packed bed of substrate or product of step (a) not only results in a graft to the substrate surface or product but also in attachment of the individual particles in the packed column to form a particle based monolith. By choosing appropriate conditions, the resulting monolith can be removed from the column body within which it was formed. Because polymers generally always contract as polymerization proceeds, the column contents shrink away from the column wall allowing removal of the monolith from the column hardware. The resulting monolith is generally flexible when well hydrated. By allowing the monolith to dry and reinserting it into suitable dimension column hardware, the resulting monolith can be utilized for chromatographic separations.

Also, according to the invention, a large quantity of particles may be packed in a bed and coated in a large flow-through column and removed in large quantities as a supply for packed smaller analytical columns.

Although the method of the invention may utilize methylamine, as set forth above a wide variety of alternative polyfunctional amines are also suitable for the present invention including simple diamines, triamines and higher polyamines. Propagation of polymer growth steps requires that the amine contain at least two available reactions sites. Termination of polymer growth can be accomplished by a final reaction step with tertiary amine containing compounds or the reaction can be ended without such a terminating reaction.

An advantage of the current invention is that when the condensation polymer is applied to a column packed with substrate or product of step (a), the coating process can be interrupted for column evaluation, and then the process can be resumed. However, because epoxides are subject to hydrolysis under alkaline conditions, it is generally preferable to interrupt the reaction after reaction with a polyfunctional amine containing reagent rather than immediately after reaction with a polyfunctional epoxy containing reagent. Likewise, although the preferred polyfunctional epoxide is butanediol diglycidyl ether a wide variety of polyfunctional epoxides may be used in the present invention. Ideally the polyfunctional epoxide should be water-soluble to facilitate formation of the condensation polymer under aqueous conditions but any of the numerous polyfunctional epoxides available can be used for this purpose. Furthermore, a wide variety polyglycidyl reagents not readily available can be readily synthesized using standard synthesis methods. While in-situ column preparation of condensation polymers is a convenient way of quickly evaluating different formulations, in-situ column preparation is generally not as efficient as batch synthesis. However, by making use of either slurry grafting techniques or preferably large packed bed reactors, optimal coating chemistries can easily be transferred to larger scale batch processes.

In general terms, epoxides and amines react as shown below.

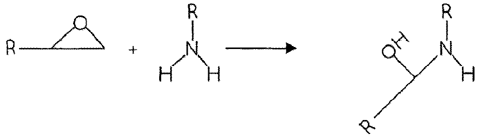

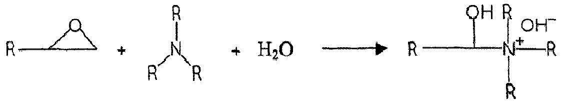

The present invention also provides an ion-exchange chromatographic packing material comprising:
(i) Substrate particles;
(ii) A basement layer covalently bonded to the substrate particles, wherein the basement layer comprises:
   a. A linear polymer comprising pendent amino groups formed by polymerising (at least) a monomer comprising at least one unsaturated carbon-carbon bond and at least one functional group selected from amino, a functional group capable of being converted to an amino group by hydrolysis and a functional group capable of being converted to an amino group via reaction with an amine either directly or indirectly, with an initiator in a polar solvent; and
(iii) A first condensation reaction polymer product formed by reacting pendent amino on the linear polymer with:
   i. At least a first polyfunctional compound having at least two functional moieties; or
   ii. At least a first polyfunctional compound having at least two functional moieties and at least a first amine compound, comprising amino groups selected from the group consisting of ammonia, a primary and a secondary amine.

In the packing material defined above, the substrate particles, monomers, initiator, polar solvent, amine compound and polyfunctional compound are as defined for the method of the invention.

Thus, the present invention also provides an ion-exchange chromatographic packing material obtained using a method of the invention as defined herein.

In a particular aspect of the invention, the coated ion exchange substrate may comprise:
(i) Substrate particles selected from the group consisting of ethylvinylbenzene-divinylbenzene (EVB-DVB), polystyrene-divinylbenzene (PS-DVB), and polyvinylalcohol (PVA);
(ii) A basement layer covalently bonded to the substrate particles, wherein the basement layer comprises:
   a. A linear polymer comprising pendent amino groups formed by polymerising (at least) a monomer selected from the group consisting of N-vinylformamide, N-methyl-N-vinylacetamide, N-[(4-vinylphenyl)methyl]acetamide, styrene amide, allylamine, amino styrene and vinyl pyridine monomers, with an initiator in a polar solvent; and
(iii) A first condensation reaction polymer product formed by reacting pendent amino on the linear polymer with:
   i. At least a first polyfunctional epoxide compound (such as 1,4-butanediol diglycidyl ether), having at least two functional moieties; or
   ii. At least a first polyfunctional epoxide compound (such as 1,4-butanediol diglycidyl ether), having at least two functional moieties and at least a first amine compound, comprising amino groups selected from the group consisting of ammonia, a primary and a secondary amine (such as methylamine).

For the avoidance of doubt, in this specification when we use the term "comprising" or "comprises" we mean that the feature being described must contain the listed component(s) but may optionally contain additional components. When we use the term "consisting essentially of" or "consists essentially of" we mean that the feature being described must contain the listed component(s) and may also contain other components provided that any components do not affect the essential properties of the feature. When we use the term "consisting of" or "consists of" we mean that the feature being described must contain the listed component(s) only.

It would be clear to the person skilled in the art that the features and combinations defined with respect to the charged particle microscope, apply equally to the method and combination defined above.

The detailed description illustrates, by way of example, not by way of limitation, the principles of the invention. The description will clearly enable one skilled in the art to make and use the invention, and described several embodiments, adaptions, variations, alternatives and uses of the invention. As used herein, the terms "about" or "approximately" for any numerical values or ranges indicate a suitable dimensional tolerance that allows the part or collection of components to functions for its intended purpose as described.

### BRIEF DESCRIPTION OF THE DRAWINGS

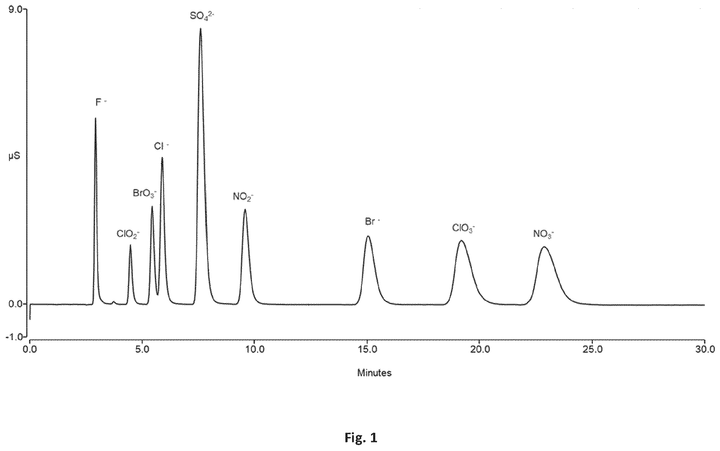

**Figure 1****:** Shows a chromatogram of the separation of inorganic anions using ion chromatography packing formed by the method of the invention comprising EVB-DVB as the substrate, N-vinylformamide as the monomer and 6 cycles of hyperbranching using methylamine (4% solution in water) and 1 ,4-butanediol diglycidyl ether (10% solution in water).

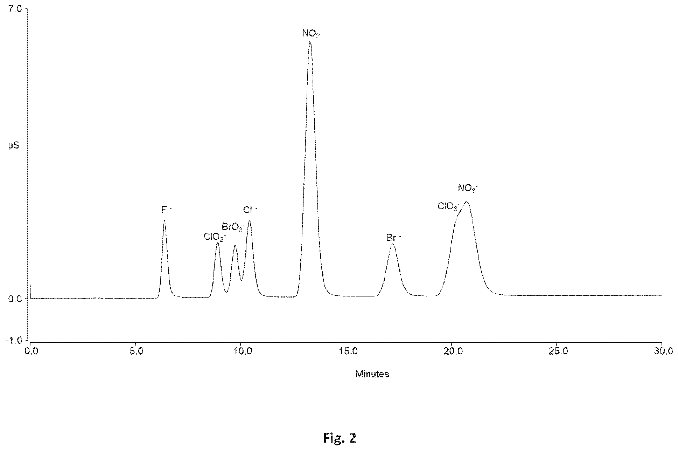

**Figure 2****:** Shows a chromatogram of the separation of inorganic anions using ion chromatography packing formed by the method of the invention comprising EVB-DVB as the substrate, N-methyl-N-vinylacetamide as the monomer and 6 cycles of hyperbranching using methylamine (4% solution in water) and 1 ,4-butanediol diglycidyl ether (10% solution in water).

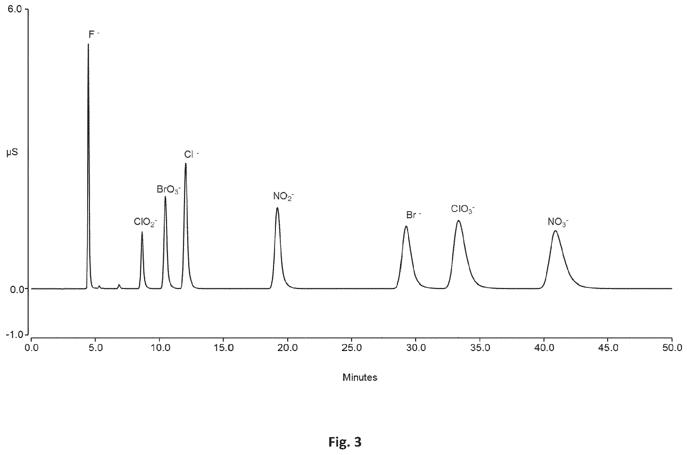

**Figure 3****:** Shows a chromatogram of the separation of inorganic anions using ion chromatography packing formed by the method of the invention comprising EVB-DVB as the substrate, N-[(4-vinylphenyl)methyl]acetamide as the monomer and 6 cycles of hyperbranching using methylamine (4% solution in water) and 1,4-butanediol diglycidyl ether (10% solution in water).

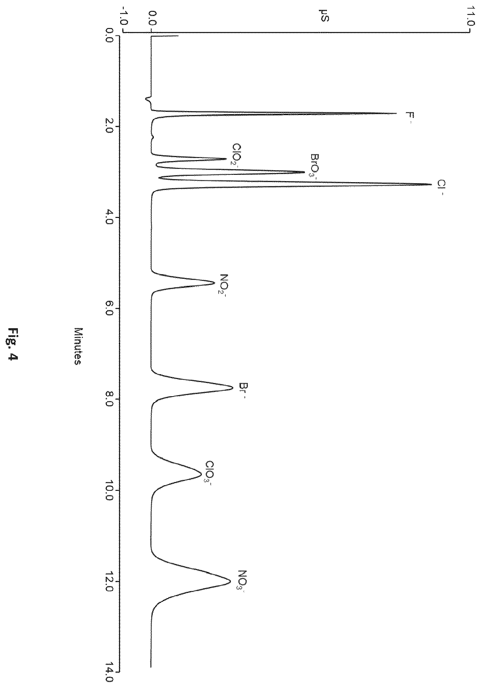

**Figure 4****:** Shows a chromatogram of the separation of inorganic anions using ion chromatography packing formed by the method of the invention comprising EVB-DVB as the substrate, N-vinylformamide as the monomer and 6 cycles of hyperbranching using 1,3-diaminopropane (10 % solution in water) and 1,4-butanediol diglycidyl ether (20 % solution in water).

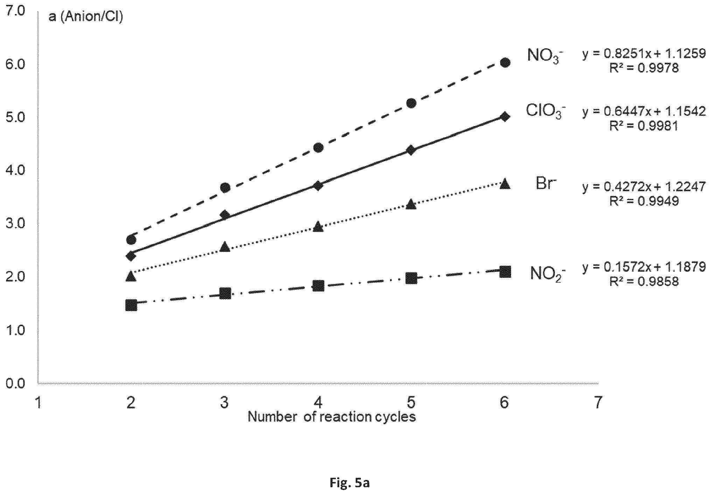

**Figure 5a****:** Shows selectivity plot versus the number of reaction cycles for ion chromatography packing formed by the method of the invention comprising EVB-DVB as the substrate, N-vinylformamide as the monomer and 2, 3, 4, 5 or 6 cycles of hyperbranching using methylamine (4% solution in water) and 1,4-butanediol diglycidyl ether (10% solution in water).

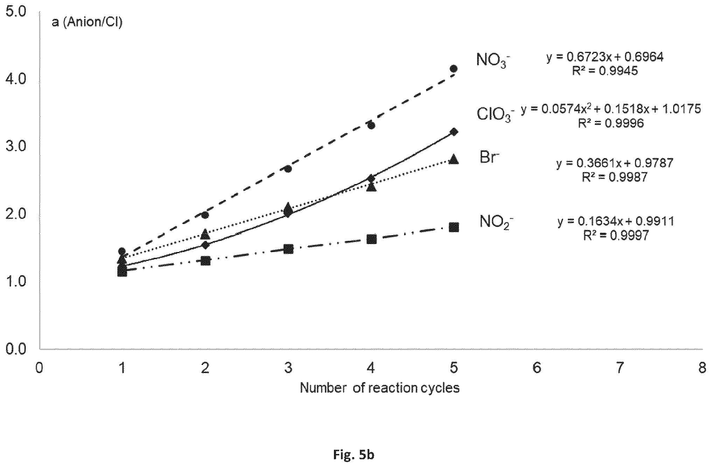

**Figure 5b****:** Shows selectivity plot versus the number of reaction cycles for ion chromatography packing formed by the method of the invention comprising sulfonated EVB-DVB as the substrate, electrostatically bonded base layer and 2, 3, 4, 5 or 6 cycles of hyperbranching using methylamine (4% solution in water) and 1,4-butanediol diglycidyl ether (10% solution in water).

In order to illustrate the present invention, the following non-limited examples of its practice are given **Example 1:**

### Synthesis of the base polymer layer:

15 g of ethylvinylbenzene-divinylbenzene substrate particles with 55% crosslink, average diameter of 6 µm and surface area of 25 m2/g are dispersed in 72 g of methanol and 5 g of N-vinylformamide (monomer) are added to the slurry and mixed well. Initiator solution is prepared by dissolving 0.2g of 4,4'-Azobis(4-cyanovaleric acid) in 3 g of methanol and added to the substrate slurry. The mixture is placed into the oven in rotating tumbler and left for 19 h at 65°C. The reaction product is filtered and washed with 500 mL of water, then redispersed in 500 mL of water, filtered, and washed again with 500 mL of water.

### Hydrolysis:

Grafted resin is dispersed in 315 g of 1 M NaOH, placed in the oven in rotating tumbler and left for 24 h at 65°C. Then the resin is filtered and washed with 500 mL of water, redispersed in 500 mL of 0.2 M sodium carbonate, filtered, and washed again with 500 mL of water.

### Packing the reaction column and forming condensation polymer:

The resin obtained after the hydrolysis step is packed into a 4 x 250 mm column and placed into the water bath at 65°C. The hyperbranched layer is formed by using the following procedure to run one reaction cycle: passing a 10% solution of 1,4-butanediol diglycidyl ether for 20 min through the column with the flow rate of 0.25 mL/min, allowing it to react in the column for 40 min; rinsing the column with deionized water for 10 min, passing a 4% solution of methylamine through the column for 20 min, allowing it to react for 40 min and rinsing the column with deionized water for 10 min. Such a reaction cycle is repeated for 6 times, then the column is rinsed with 20 mM KOH.

The chromatogram of the separation of some monovalent inorganic anions in suppressed ion chromatography mode with the prepared column using 20 mM KOH as eluent with a flow of 1 mL/min is presented in Figure 1.

### Example 2:

### Synthesis of the base layer:

Same as in the Example 1, but the monomer used for grafting is N-methyl-N-vinylacetamide taken in the same molar concentration as the monomer is the Example 1.

### Hydrolysis:

Same as in the Example 1.

### Packing the reaction column and forming condensation polymer:

Same as in the Example 1. The chromatogram of the separation of some monovalent inorganic anions in suppressed ion chromatography mode with the prepared column using 1 mM KOH as eluent with a flow of 1 mL/min is presented in Figure 2.

### Example 3:

### Synthesis of the base layer:

Same as in the Example 1, but the monomer used for grafting is N-[(4-vinylphenyl)methyl]acetamide using a 5 times lower molar concentration than the monomer in the Example 1.

### Hydrolysis:

Same as in the Example 1, but redispersion in 0.2 M Sodium Carbonate is not required.

### First Reaction cycle in bulk:

7.5 g of wet resin (after the hydrolysis step) is dispersed in 6.7g of deionized water and the slurry is sonicated in the sonication bath for 10 min. 2.1 g of 1,4-butanediol diglycidyl ether is added to the slurry. The mixture is placed into the oven in a rotating tumbler for 19 h at 75°C. After 19 h the resin is filtered and washed with 300 mL of water, redispersed in 300 mL of water, filtered, and washed again with 300 mL of water. Then the resin is dispersed in 6.2 g of 4% methylamine solution in water. The mixture is placed in the preheated oven and mixed in a tumbler for 1 h at 65°C, then filtered and washed with 300 mL of water, redispersed in 300 mL of water, filtered, and washed again with 300 mL of water.

### Packing the reaction column and forming condensation polymer:

Same as in the Example 1, but the number of reaction cycles in the reaction column is 5. The chromatogram of the separation of some monovalent inorganic anions in suppressed ion chromatography mode with the prepared column using 5 mM KOH as eluent with a flow of 1 mL/min is presented in Figure 3.

### Example 4:

### Synthesis of the base layer:

Same as in the Example 1.

### Hydrolysis:

Same as in the Example 1.

### Packing the reaction column and forming condensation polymer:

Same as in the Example 1, but the amine used in hyperbranching cycles is 10% solution of 1,3-diaminopropane, 20% solution of 1,4-butanediol diglycidyl ether is used and total number of reaction cycles is 5. The chromatogram of the separation of some monovalent inorganic anions in suppressed ion chromatography mode with the prepared column using 1 mM KOH as eluent with a flow of 1 mL/min is presented in Figure 4.

### Example 5:

### Synthesis of the base layer:

Same as in the Example 1.

### Hydrolysis:

Same as in the Example 1.

### Formation of condensation polymer in one-pot reaction:

1.2 g of wet resin (after the hydrolysis step) is dispersed in 10 g of deionized water in a vial and the slurry is sonicated in the sonication bath for 2 min. 10 g of deionized water, 1.8 g of 1,4-butanediol diglycidyl ether and 0.925 g of dimethylamine are mixed in a vial and placed into sonication bath for 10 min. The mixture is then transferred into the vial with resin slurry, and the vial is placed in the rotating tumbler in the oven for 4 h at 65°C. After reaction the resin is filtered and washed with 300 mL of water, redispersed in 300 mL of water, filtered, and washed again with 300 mL of water.

### Packing the column:

The prepared resin is packed into a 4 x 250 mm column and rinsed with 5 mM KOH before using for chromatography runs.

### Example 6:

Products of hydrolysis step in the Examples 1, 2, and 3 are packed into 4 x 250 mm columns and subjected to the measurement of column capacities before the formation of condensation polymer and after running 6 reaction cycles. The results shown in Table 1 demonstrate that difference in monomer reactivity in grafting step and ease of amide group hydrolysis in every case result in different amount of amino groups in the formed polymer that are available for further attachment of hyperbranched condensation polymers, which affects resulting column capacity.

**Table 1**

| **Monomer in the BL** | ***Capacity after base layer (µEq)** | ***Capacity after 6 reaction cycles (µEq)** |
|---|---|---|
| N-vinylformamide | 91.2 | 154 |
| N-methyl-N-vinylacetamide | 1.7 | 35 |
| N-[(4-vinylphenyl)methyl]acetamide | 22.9 | 127 |

| | | |
|---|---|---|
| * Per 4 × 250 mm column | | |

### Example 7:

Resin prepared according to the Example 1 and packed into the column is tested after 2, 3, 4, 5, and 6 reaction cycles during the process of forming hyperbranched condensation polymer. KOH in the concentration range from 1 mM to 40 mM is used as an eluent with a flow rate of 1 mL/min. The selectivity of this grafted column after every reaction cycle is plotted vs. the number of reaction cycles; the plot is presented in Figure 5a. The same process of forming hyperbranched condensation polymer and column testing is applied to the electrostatically bonded basement layer prepared according to the US7291395 (4.5 g of sulfonated ethylvinylbenzene-dilvinylbenzene substrate particles with 55% crosslink, average diameter of 6.45 µm and surface area of 20 m2/g are placed into a scintillation vial; 0.368 g of 1.4-butanediol diglycidyl ether, 3.277 g of water, and 1.5 g of 4% methylamine are added to the substrate and mixed well. The mixture is placed in the tumbler in a 65°C oven for 2 h, then removed from the oven and cooled for 10-15 min. 6 g of deionized water are added to the vial, mixed and the slurry is packed into 4 x 250 mm column). The selectivity of the electrostatically bonded column after every reaction cycle is plotted vs. the number of reaction cycles; the plot is presented in Figure 5b. Figure 5a shows fixed elution order and good linear dependence of selectivity for all anions from the number of reaction cycles in the process of forming condensation polymers for a covalently bonded anion exchanger. Figure 5b shows that in the case of electrostatically bonded hyperbranched anion exchangers, elution order for chlorate and bromide changes with increasing the number of reaction cycles and selectivity for chlorate is a square function of reaction cycle number. This shows that covalently bonded phases are less dependent on the crosslinking degree of the condensation polymer.

## Claims

1. A method for making an ion-exchange chromatographic packing material, wherein the packing material comprises a condensation polymer covalently bonded to substrate particles and the method for forming the condensation polymer comprises:
(a) forming a linear polymer product comprising pendant amino groups by reacting a monomer comprising at least one unsaturated carbon-carbon bond and at least one functional group selected from amino, a functional group capable of being converted to an amino group by hydrolysis and a functional group capable of being converted to an amino group via reaction with an amine either directly or indirectly, with an initiator in a polar solvent, and optionally converting any pendent functional groups capable of being converted to an amino group by hydrolysis and/or functional groups capable of being converted to an amino group via reaction with an amine either directly or indirectly on the linear polymer product to pendant amino groups; and
(b) reacting the pendent amino groups present on the linear polymer product after step (a) with:
(i) at least a first polyfunctional compound, having at least two functional moieties reactive with said pendent amino groups, or
(ii) at least a first polyfunctional compound, having at least two functional moieties reactive with said pendent amino groups and at least a first amine compound, comprising amino groups selected from the group consisting of ammonia, a primary and a secondary amine
to form a first condensation polymer reaction product with a first unreacted excess of functional moieties.

2. A method according to claim 1, wherein the functional group of the monomer that is capable of being converted to an amino group by hydrolysis or functional group capable of being converted to an amino group via reaction with an amine either directly or indirectly is selected from the group consisting of amides, isocyanates, carbamates, isocyanurates, epoxides, halides, sulphides and tosylates.

3. A method according to claim 1 or 2, wherein the pedant amino groups on the linear polymer product are primary and/or secondary or tertiary amine groups.

4. A method according to any one of the preceding claims, wherein the monomer in step (a) is select from the group consisting of N-vinylformamide, N-methyl-N-vinylacetamide, N-[(4-vinylphenyl)methyl]acetamide, styrene amide, allylamine, amino styrene and vinyl pyridine monomers.

5. The method according to any one of the preceding claims, wherein the substrate particles have a surface comprising an organic polymer, preferably selected from the group consisting of ethylvinylbenzene-divinylbenzene (EVB-DVB), polystyrene-divinylbenzene (PS-DVB), and polyvinylalcohol (PVA).

6. The method according to any one of the preceding claims, wherein the at least two functional moieties of the at least a first polyfunctional compound include at least one functional moiety selected from the group consisting of epoxides, alkyl halides, benzyl halides, tosylates, methyl sulphides and mixtures thereof.

7. The method according to claim 6, wherein the at least two functional moieties of the at least a first polyfunctional compound comprise epoxide moieties.

8. The method according to any one of the preceding claims, wherein the method further comprises step (c) (i) or (c) (ii), wherein in step (c) (i) the unreacted excess of functional moieties on the CPRP of step (b) (i) may be reacted with at least a second amine compound or both at least a second polyfunctional compound and at least a second amine compound to form a second CPRP; and in step (c) (ii) the unreacted excess of functional moieties on the CPRP of step (b) (ii) may be reacted with at least a second polyfunctional compound or both at least a second polyfunctional compound and at least a second amine compound to form a second CPRP.

9. The method of claim 8 further comprising repeating step (c) (i) or (ii) at least one more time and reacting amine reactive functional moieties on the exterior condensation polymer reaction product with an amine containing cation functional compounds to convert the packing to a cation exchange substrate.

10. The method of any one of the preceding claims in which the first, second or subsequent condensation polymers includes functional groups which are cross-linked.

11. The method of any one of the preceding claims in which the first, second or subsequent condensation polymers includes functional groups comprising branched polymer chains.

12. The method of any one of the preceding claims in which step (b) or (c) is performed in a flow-through chamber by sequentially flowing (i) said at least a first polyfunctional compound, or (ii) said at least a first polyfunctional compound and at least a first amine compound, past the linear polymer product of step (a) or the first condensation polymer reaction product of step (b) (i) or (b) (ii).

13. The method of any one of the preceding claims in which the substrate comprises a flow-through monolithic medium.

14. The method of any one of claims 1 to 12 in which the substrate comprises a wall of a flow-through hollow tube.

15. The method of any one of the preceding claims further comprising reacting a further amine compound and/or polyfunctional compound with unreacted excess amine compound moieties or polyfunctional compound moieties from the first or second condensation polymer reaction product in step (b) or (c).

16. The method of any one of the preceding claims, wherein step (a) is conducted in the presence of substrate particles.

17. The method of any one of claims 1 to 15 in which the product of step (a) or (b) is reacted with a plurality of substrate particles.

18. The method of any one of the preceding claims wherein the coated particles are provided in a form suitable for use as chromatographic packing.

19. The method of any one of the preceding claims, wherein the ion-exchange chromatographic packing material is an anionic-exchange chromatographic packing material.

20. An ion-exchange chromatographic packing material formed by the method of any one of the preceding claims.

21. An ion-exchange chromatographic packing material comprising:
(i) Substrate particles;
(ii) A basement layer covalently bonded to the substrate particles, wherein the basement layer comprises:
a. A linear polymer comprising pendent amino groups formed by polymerising a monomer comprising at least one unsaturated carbon-carbon bond and at least one functional group selected from amino, a functional group capable of being converted to an amino group by hydrolysis and a functional group capable of being converted to an amino group via reaction with an amine either directly or indirectly, with an initiator in a polar solvent; and
(iii) A first condensation reaction polymer product formed by reacting pendent amino on the linear polymer with:
i. At least a first polyfunctional compound having at least two functional moieties; or
ii. At least a first polyfunctional compound having at least two functional moieties and at least a first amine compound, comprising amino groups selected from the group consisting of ammonia, a primary and a secondary amine.

22. The packing material of claim 21 in which said two functional moieties of said polyfunctional compound include at least one functional moiety selected from the group consisting of epoxide, alkyl halides, benzylhalides, tosylates, methylsulfides, and mixtures thereof.

23. The packing material of claim 22 in which said at least one of said two functional moieties of the polyfunctional compounds comprise epoxide moieties.

24. The packing material of any one of claims 21 to 23 in which said substrate has a surface comprising an organic polymer, preferably selected from the group consisting of ethylvinylbenzene-divinylbenzene (EVB-DVB), polystyrene-divinylbenzene (PS-DVB), and polyvinylalcohol (PVA).

25. The packing material of any one of claims 21 to 24 in which said substrate comprises a flow-through monolithic medium or a wall of a flow-through hollow tube.

26. The packing material of any one of claims 21 to 25, wherein the wherein the monomer is select from the group consisting of N-vinylformamide, N-methyl-N-vinylacetamide, N-[(4-vinylphenyl)methyl]acetamide, styrene amide, allylamine, amino styrene and vinyl pyridine monomers.

27. The packing material according to any one of claims 21 to 26, wherein the packing is obtained using a method as defined in any one of claims 1 to 19.
